# EUROPEAN PATENT SPECIFICATION

(11) **EP 1 536 270 B1**
(45) Date of publication and mention of the grant of the patent: **16.12.2009**
(21) Application number: 03733352.3
(22) Date of filing: 10.06.2003
(51) Int. Cl.: G02F 1/1339, C09K 3/10, C09J 4/00, C08F 222/36, C08F 222/10

(54) **PHOTOCURABLE COMPOSITION FOR LIQUID-CRYSTAL PANEL SEALING AND LIQUID-CRYSTAL PANEL**
LICHTAUSHÄRTBARE ZUSAMMENSETZUNG ZUR VERSIEGELUNG EINER FLÜSSIGKRISTALLTAFEL UND FLÜSSIGKRISTALLTAFEL
COMPOSITION PHOTODURCISSABLE D'ETANCHEIFICATION DE PANNEAU A CRISTAUX LIQUIDES ET PANNEAU A CRISTAUX LIQUIDES

(30) Priority: 14.06.2002 JP 2002174239
(43) Date of publication of application: 01.06.2005
(73) Proprietor: DIC Corporation, Tokyo (JP)
(72) Inventor: TAKEDA, Hiroyuki, Ichihara-shi, Chiba 290-0255 (JP); SAKURAI, Yoshinobu, Sakura-shi, Chiba 285-0037 (JP); IWAMOTO, Akihiro, Ageo-shi, Saitama 362-0015 (JP); YONEHARA, Hisatomo, Sakura-shi, Chiba 285-0034 (JP)
(74) Representative: Albrecht, Thomas
(86) International application number: PCT/JP2003/007349
(87) International publication number: WO 2003/107084

(56) References cited:
- JP-A- 5 341 296
- JP-A- 2000 219 868

## Description

### TECHNICAL FIELD

The present invention relates to a photocurable composition for sealing a liquid crystal panel, and a liquid crystal panel having a seal portion or end-sealing portion comprising a cured resin article of the composition and, more particularly, to a photocurable composition for sealing a liquid crystal panel, which can undergo photocuring without the use of a general photoinitiator having no polymerizable group.

### BACKGROUND ART

In general, liquid crystal panels each comprise a back substrate (rear substrate) and a front substrate facing each other, and a liquid crystal encapsulated between the two substrates. The back substrate has, for example, thin-film transistors, display electrodes (pixel electrodes) and an alignment layer. The front substrate has, for example, color filters, an electrode and an alignment layer. A sealing material is used to bond the two substrates.

A thermosetting epoxy adhesive is generally used as the sealing material. However, it takes about 30 minutes or more for the thermosetting epoxy adhesive to be cured completely. This may cause a horizontal shift of the two substrates that have been aligned. Sealing materials using photocurable compositions which are rapidly cured have therefore been developed.

Japanese Unexamined Patent Application, First Publication No. Hei 7-13173 and Japanese Unexamined Patent Application, First Publication No. Hei 7-13174, for example, each disclose a photocurable composition for sealing a liquid crystal panel comprising a polycarbonate-modified urethane acrylate, acrylic monomer and a photoinitiator.

Japanese Unexamined Patent Application, First Publication No. 2000-219868 discloses a photocurable composition for sealing a liquid crystal panel, comprising a urethane (meth)acrylate oligomer having a carboxyl group per molecule, a compound having a maleimide group and a polyether linking chain or a polyester linking chain, and a silane coupling agent.

The photocurable compositions for sealing a liquid crystal panel disclosed in Japanese Unexamined Patent Application, First Publication No. Hei 7-13173 and Japanese Unexamined Patent Application, First Publication No. Hei 7-13174, however, have a water vapor transmission of 10 g/m² or more per 24 hours and tends to exhibit unsatisfactory moisture proof, namely, unsatisfactory water vapor barrier properties. The photocurable compositions as the sealing materials each use a general photoinitiator. A photo-decomposed product of the photoinitiator and/or unreacted photoinitiator may remain in the sealing materials after curing and bleeds out into the liquid crystal. This causes a decreased voltage holding ratio of the resulting liquid crystal panel.

In contrast, the photocurable composition for sealing a liquid crystal panel disclosed in Japanese Unexamined Patent Application, First Publication No. 2000-219868 does not allow remaining of a photo-decomposed product of the photoinitiator and/or unreacted photoinitiator to remain, which may cause a decreased voltage holding ratio, in a sealed portion, since the composition contains the maleimide group which plays a role as a photoinitiator. This photocurable composition, however, exhibits unsatisfactory moisture proof. In addition, a cured film of the photocurable composition in question has a low glass transition point (hereinafter simply referred to as Tg), has unsatisfactory heat resistance and tends to cause misalignment upon heating, despite the resulting liquid crystal panel prepared using such a photocurable composition requiring such heat resistance so as to avoid misalignment of upper and lower substrates in an annealing process. In the annealing process, an encapsulated material for liquid crystal panel is heated to a lower limit temperature, at which the material for liquid crystal is in an isotropic phase, or higher.

### DISCLOSURE OF INVENTION

Accordingly, an object to be achieved by the present invention is to provide a photocurable composition for sealing a liquid crystal panel, which has excellent heat resistance and moisture proof, namely, water vapor barrier properties, and can prevent the resulting liquid crystal panel from decreasing in voltage holding ratio.

To achieve the above objects, the present invention provides a photocurable composition for sealing a liquid crystal panel, comprising (1) a photopolymerizable compound having a fused alicyclic structure and a maleimide group, and (2) a photopolymerizable compound having an alicyclic structure and two or more (meth)acryloyl groups per molecule.

To achieve the above object, the present invention further provides a liquid crystal panel having a seal portion or end-sealing portion comprising a cured resin article of the photocurable composition.

### BEST MODE FOR CARRYING OUT THE INVENTION

The present invention will be illustrated in further detail below.

The fused alicyclic structure in the photopolymerizable compound having a fused alicyclic structure and a maleimide group for use in the present invention (hereinafter abbreviated to a "maleimide compound for use in the present invention") indicates a structure comprising two or more, preferably five or less, saturated aliphatic hydrocarbon rings each having three or more, preferably ten or less, carbon atoms. Examples of the fused alicyclic structure are bicyclohexane ring, bicycloheptane ring, bicyclooctane ring, bicyclononane ring, bicyclodecane ring, bicycloundecane ring, bicyclododecane ring, tricyclodecane ring, tricycloundecane ring, tricyclododecane ring, tricyclotetradecane ring, tricyclopentadecane ring, tricyclohexadecane ring, adamantane ring and cubane ring. Preferably, these fused alicyclic structures have neither acid group, such as carboxyl group or sulfonic group, nor basic group, such as amino group or quaternary amino group.

Among them, bicyclodecane ring, adamantane ring and tricyclodecane ring are preferred. A cured resin article of a composition containing a maleimide compound having any of these rings has a high Tg, exhibits excellent heat resistance and satisfactory moisture proof.

The content of the fused alicyclic structure in the maleimide compound for use in the present invention preferably falls within a range of 20 to 70% by mass. It is preferred because by setting the content at 20% by mass or more, a cured resin article of the composition of the present invention tends to have a high Tg and to exhibit excellent heat resistance. It is preferred because by setting the content at 70% by mass or less, the cured resin article of the composition of the present invention tends to have reduced water vapor transmission, namely, improved water vapor barrier properties and to exhibit good balance between the water vapor barrier properties and adhesion.

Of the maleimide compounds for use in the present invention, compounds represented by following the general formulas (1) to (3) are typically preferred. These compounds are capable of satisfactorily initiating photopolymerization, and the resulting cured particles of the composition of the present invention containing any of these compounds have a high Tg and exhibit excellent moisture proof.

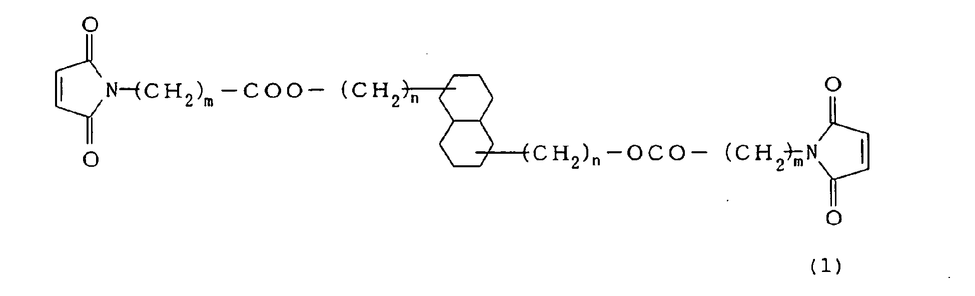

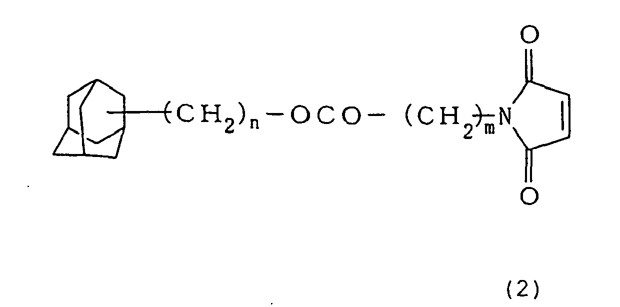

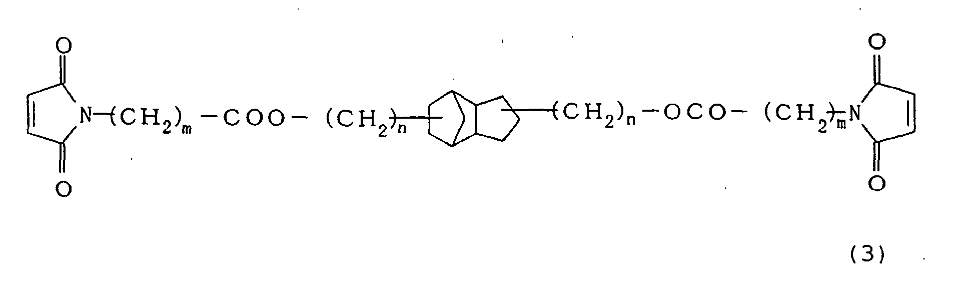

In the general formulas (1) to (3), m represents an integer of 1 to 5; and n represents an integer of 0 to 4.

The maleimide compound for use in the present invention can be easily prepared, for example, by subjecting a compound having the fused alicyclic structure and a hydroxyl group to esterification reaction or transesterification reaction with a maleimide compound having a carboxyl group or an ester group.

The maleimide compound for use in the present invention can also be easily prepared by subjecting a compound having the fused alicyclic structure and a carboxyl group or ester group to esterification reaction or transesterification reaction with a maleimide compound having a hydroxyl group.

It can also be easily prepared by subjecting a compound having the fused alicyclic structure and an amino group to condensation reaction with maleic anhydride.

More specifically, the compound represented by the general formula (1) having a decalin ring and maleimide groups can be prepared by subjecting butyl maleimidoacetate and decalindiol to transesterification reaction in the presence of a catalyst.

The compound represented by the general formula (2) having an adamantane ring and a maleimide group can be prepared by subjecting butyl maleimidoacetate and adamantanemethanol to transesterification reaction in the presence of a catalyst.

The compound represented by the general formula (3) having a tricyclodecane ring and maleimide groups can be prepared by subjecting butyl maleimidoacetate and bis-hydroxymethyl-tricyclodecane to transesterification reaction in the presence of a catalyst.

The amount of the maleimide compound for use in the present invention preferably falls within a range of 1 to 30% by mass and typically preferably 1 to 25% by mass based on the total mass of the composition. If the amount of the compound is less than 1%, the resulting composition may not be significantly cured at a practical dose. If it exceeds 30%, the resulting sealing material tends to exhibit unsatisfactory adhesion.

The photopolymerizable compound for use in the present invention has an alicyclic structure and two or more, preferably six or less, (meth)acryloyl groups per molecule. The composition of the present invention containing this photopolymerizable compound does not cause curing inhibition. The cured resin article of the composition has a high Tg and exhibits satisfactory moisture proof. Examples of such photopolymerizable compounds are a photopolymerizable urethane (meth)acrylate having an alicyclic structure and two or more (meth)acryloyl groups per molecule, a photopolymerizable epoxy (meth)acrylate having an alicyclic structure and two or more (meth)acryloyl groups per molecule, a photopolymerizable polyester (meth)acrylate having an alicyclic structure and two or more (meth)acryloyl groups per molecule, and a photopolymerizable polyether (meth)acrylate having an alicyclic structure and two or more (meth)acryloyl groups per molecule.

Among these compounds, the photopolymerizable urethane (meth)acrylate having an alicyclic structure and two or more (meth)acryloyl groups per molecule is typically preferred, since the resulting cured resin article of the composition of the present invention containing this compound exhibits excellent adhesion, a high Tg and satisfactory moisture proof.

The photopolymerizable compounds having an alicyclic structure and two or more (meth)acryloyl groups per molecule for use in the present invention preferably have neither acid group, such as carboxyl group or sulfonic acidic group, nor basic group, such as amino group or quaternary amino group.

The alicyclic structure in the photopolymerizable compound having an alicyclic structure and two or more (meth)acryloyl groups per molecule indicates a ring structure comprising a saturated hydrocarbon having three or more, preferably ten or less, carbon atoms. The alicyclic structure of the photopolymerizable compound may be any of a monocyclic structure and a fused polycyclic structure. Examples of the monocyclic structure are cyclopropane ring, cyclobutane ring, cyclopentane ring, cyclohexane ring, cycloheptane ring, cyclooctane ring, cyclononane ring and cyclodecane ring. Examples of the fused polycyclic structure are bicyclohexane ring, bicycloheptane ring, bicyclooctane ring, bicyclononane ring, bicyclodecane ring, bicycloundecane ring, bicyclododecane ring, tricyclodecane ring, tricycloundecane ring, tricyclododecane ring, tricyclotetradecane ring, tricyclopentadecane ring, tricyclohexadecane ring, adamantane ring and cubane ring. The alicyclic structure may have a substituent such as amino group, amido group, an alkyl group, isocyanurate group, ester group, carboxyl group or hydroxyl group.

The content of the alicyclic structure in the photopolymerizable compound having the alicyclic structure and two or more (meth)acryloyl groups per molecule for use in the present invention preferably falls within a range of 5 to 30% by mass. It is preferred because by setting the content at 5% by mass or more, a cured resin article of the composition of the present invention tends to have a high Tg and to exhibit excellent heat resistance. It is preferred because by setting the content at 30% by mass or less, a cured resin article of the composition of the present invention tends to have a reduced water vapor transmission, namely, increased water vapor barrier properties and to exhibit good balance between the water vapor barrier properties and adhesion.

Examples of the photopolymerizable urethane (meth)acrylate having an alicyclic structure and two or more (meth)acryloyl groups per molecule for use in the present invention are 1,1-di(meth)acryloyloxymethylisophorone dicarbamic acid diester, 2-(1,1,1-tri(meth)acryloyloxymethyl)ethylisophorone dicarbamic acid diester, 1,6-hexanediol-modified-2-(meth)acryloyloxyethylisophorone dicarbamic acid diester and 1,4-poly(tetramethylene glycol)-modified-2-(meth)acryloyloxyethylisophorone dicarbamic acid diester. Such urethane (meth)acrylates are commercially available, for example, under the trade names of "UA101I", "UA306I" and "UF8001" from Kyoeisha Chemical Co., Ltd.; "Actilane 230HD30", "Actilane 250HD25" and "Actilane 250TP25" from Akcros Chemicals; "M1600" from Toagosei Co., Ltd.; and "EB4866" and "EB280/15IB" from DAICEL-UCB Company, Ltd.

The photocurable composition for sealing a liquid crystal panel of the present invention using the photopolymerizable urethane (meth)acrylate having an alicyclic structure and two or more (meth)acryloyl groups per molecule is substantially impermeable to water vapor and can be used as a sealing material exhibiting excellent moisture proof.

A photopolymerizable (meth)acrylic ester having an alicyclic structure and two or more (meth)acryloyl groups per molecule can be used as the photopolymerizable compound having an alicyclic structure and two or more (meth)acryloyl groups per molecule for use in the present invention. Examples of such a photopolymerizable (meth)acrylic ester are tricyclodecane dimethanol di(meth)acrylate and epichlorohydrin-modified hexahydrophthalic acid diacrylate. Such compounds are commercially available, for example, under the trade names of "IRR214" from DAICEL-UCB Company, Ltd.; "Denacol Acrylate DA-722" from Nagase ChemiteX Corporation; and "LUMICURE DCA-200" from Dainippon Ink & Chemicals, Inc.

The amount of the photopolymerizable compound having an alicyclic structure and two or more (meth)acryloyl groups per molecule for use in the present invention preferably falls within a range of 20 to 60% by mass based on the total mass of the composition. If the amount of the compound is less than 20% by mass, the resulting composition may exhibit unsatisfactory adhesion. If it exceeds 60% by mass, the resulting cured film of the composition may have a decreased Tg.

It is preferred that the amount of the fused alicyclic structure of the maleimide compound for use in the present invention falls within a range of 30 to 40% by mass based on the total mass of the composition, and that the amount of the alicyclic structure of the photopolymerizable compound having an alicyclic structure and two or more (meth)acryloyl groups per molecule falls within a range of 5 to 20% by mass based on the total mass of the composition. It is preferred because a cured resin article of the composition of the present invention has a high Tg and exhibits improved water vapor barrier rate and improved moisture proof by setting the amount of the fused alicyclic structure of the maleimide compound for use in the present invention at 30% by mass or more based on the total mass of the composition, and setting the amount of the alicyclic structure of the photopolymerizable compound having an alicyclic structure and two or more (meth)acryloyl groups per molecule at 5% by mass or more based on the total mass of the composition. It is preferred because the cured resin article of the composition of the present invention tends to have excellent adhesion by setting the amount of the fused alicyclic structure of the maleimide compound for use in the present invention at 40% by mass or less based on the total mass of the composition, and setting the amount of the alicyclic structure of the photopolymerizable compound having an alicyclic structure and two or more (meth)acryloyl groups per molecule at 20% by mass or less based on the total mass of the composition.

The photocurable composition for sealing a liquid crystal panel of the present invention may further comprise a conventional photopolymerizable compound having one (meth)acryloyl group per molecule, except the maleimide compound having a fused alicyclic structure and the photopolymerizable compound having an alicyclic structure and two or more (meth)acryloyl groups per molecule, according to necessity within ranges not adversely affecting the advantages of the present invention.

As the photopolymerizable compound having one (meth)acryloyl group per molecule, (meth)acrylic esters are preferred, since they can be satisfactorily diluted and cured. Among such (meth)acrylic esters, (meth)acrylic esters each having an alicyclic structure are preferred. This is because a cured resin article of the composition of the present invention containing any of these compounds has a high Tg and exhibits excellent moisture proof. The alicyclic structure herein may be the same or similar structure as the structures listed in the explanation of the photopolymerizable compound having the photopolymerizable compound having an alicyclic structure and two or more (meth)acryloyl groups per molecule for use in the present invention.

Examples of the photopolymerizable (meth)acrylic ester having an alicyclic structure and one (meth)acryloyl group per molecule are isobornyl (meth)acrylate, dicyclopentanyl (meth)acrylate and cyclohexyl (meth)acrylate. Such (meth)acrylic esters having an alicyclic structure are commercially available, for example, under the trade names of "IBXA" and "Biscoat #155" from Osaka Organic Chemical Industry Ltd.; "LIGHT-ESTER CH" from Kyoeisha Chemical Co., Ltd.; and "FANCRYL FA-513A" and "FA-513M" from Hitachi Chemical Co., Ltd.

The amount of the photopolymerizable compound having one (meth)acryloyl group per molecule, if used, is preferably within a range of 0.1 to 60% by mass and typically preferably 5 to 55% by mass based on the total mass of the photopolymerizable compounds in the composition. It is not preferred because if the amount is less than 0.1% by mass, the composition may hardly be diluted to a viscosity necessary for the application process of the sealing material. In contrast, it is not preferred because if it exceeds 60% by mass, a cured resin article of the resulting composition may have unsatisfactory adhesion.

The photocurable composition for sealing a liquid crystal panel of the present invention may further comprise a conventional silane coupling agent for further improved adhesion. Among such silane coupling agents, a silane coupling agent having a polymerizable group is typically preferred, since they undergo copolymerization with the photopolymerizable monomers upon photo-curing to thereby obtain high adhesion.

The silane coupling agent having a polymerizable group includes, for example, 3-(meth)acryloyloxypropyltrimethoxysilane. Such silane coupling agents each having a polymerizable group are commercially available, for example, under the trade names of "KBM503", "KBE503", "KBM502", "KBE502", "KBM5102" and "KBM5103" from Shin-Etsu Chemical Co., Ltd.

The amount of the silane coupling agent, if used, is within a range of preferably 0.1 to 10% by mass and typically preferably 1 to 5% by mass based on the total mass of the composition. It is not preferred because if the amount of the silane coupling agent is less than 0.1% by mass, effective adhesion may not be obtained. It is not preferred because if it exceeds 10% by mass, the composition may often cause phase separation.

The photocurable composition for sealing a liquid crystal panel of the present invention may further comprise any suitable conventional additives for the purpose of, for example, viscosity control or improvement in storage stability.

The photocurable composition for sealing a liquid crystal panel of the present invention can be used as a sealing material for the preparation of liquid crystal panels and as an end-sealing material for sealing a filling port after liquid crystal material is charged into the liquid crystal cell.

The liquid crystal panel can be prepared, for example, in the following manner. The photocurable composition for sealing a liquid crystal panel of the present invention is applied to one of front and back substrates having, for example, thin-film transistors, display electrodes, alignment layer, color filters and/or an electrode. Then, the other paired substrate was overlaid thereon after adjusting a position. The photocurable composition for sealing a liquid crystal panel of the present invention is cured by applying radiation from the surface or side of the substrate. A liquid crystal is then charged into the resulting liquid crystal cell through a filling port, and the filling port is sealed with an end-sealing material to obtain the liquid crystal panel.

The liquid crystal panel can also be prepared in the following manner. The photocurable composition for sealing a liquid crystal panel of the present invention is applied in the form of a frame to the outer periphery of one of the two substrates, and the liquid crystal is added dropwise into the frame. The other paired substrate is overlaid thereon in vacuum, and the photocurable composition is cured by applying radiation.

The photocurable composition for sealing a liquid crystal panel of the present invention may be applied to the surface of the substrate with the use of a dispenser or by screen printing. In this case, the composition is generally applied to a line width of 0.08 to 0.1 mm and a line height of 5 to 50 µm.

Ultraviolet(UV)radiation or visible radiation is preferably used as the radiation for curing the photocurable composition for sealing a liquid crystal panel of the present invention, of which radiation with a wavelength of 300 nm to 400 nm is typically preferred. A high-pressure mercury lamp or a metal halide lamp, for example, can be used as the light source. The intensity of the light source is preferably 250 W/m² or more for rapid curing. The dose of light to be irradiated is preferably 100 J/m² or more in terms of integrated quantity of light, for satisfactory curing. The photocurable composition for sealing a liquid crystal panel of the present invention can be cured by the action of light radiation under air atmosphere. The composition is, however, preferably subjected to photocuring under the atmosphere of an inert gas such as nitrogen gas, since the composition can be cured at a lower dose of light.

The photocurable composition for sealing a liquid crystal panel of the present invention contains the maleimide compound and can therefore undergo photocuring without the use of a general photoinitiator. This avoids bleeding of the photo-decomposed product of the photocurable composition into the material for liquid crystal in the liquid crystal panel. The resulting liquid crystal panel does not cause a decreased voltage holding ratio.

### EXAMPLES

The present invention will now be described in detail by way of examples and comparative examples. All "parts" in the examples and comparative examples are "parts by mass" unless otherwise specified. The adhesion, moisture proof, Tg, voltage holding ratio, heat resistance and curability were determined as evaluation. The determination methods are as follows.

### <Adhesion Test>

A spherical spacer "Micropearl SP-209" having an average particle size of about 9 µm manufactured by Sekisui Chemical Co., Ltd., and 0.01 to 0.02 g of each of photocurable compositions for sealing a liquid crystal panel described later in Examples 1 to 3 and Comparative Examples 1 to 4 were applied to the center of a glass plate "S-1111" 1 mm thick, 76 mm long and 26 mm wide manufactured by Matsunami Glass Ind., Ltd. Another piece of the glass plate was overlaid thereon in the shape of a cross. 250 W/m² of UV-visible light (using a high-pressure mercury lamp) was irradiated to the glass plate from above for 200 seconds under air atmosphere to obtain test samples with an glue area of 0.2 to 0.4 cm².

The glass plates of each of the test samples were pulled in a direction perpendicular to the glue line from both sides at a rate of 10 mm/min, and the force (N) required to break the adhered portion between the glass substrates was determined. The adhesion of the test sample was evaluated based on the force per unit area (N/cm²) according to the following four criteria.
A: Very Excellent
B: Excellent
C: Fair
D: Failure

### <Moisture proof Test>

The moisture proof was determined according to Japanese Industrial Standards (JIS) Z-0208. Specifically, the amount of moisture (water) (g/m².24 hr) which had permeated a sample sealing material at 40°C and relative humidity of 90% for 24 hours was determined. A sample sealing material was prepared by applying each of the photocurable compositions for sealing a liquid crystal panel described in Examples 1 and 3 and Comparative Example 1 to 4 to a substrate to a thickness of about 200 µm using an applicator. Then, 250 W/m² of UV-visible light (using a high-pressure mercury lamp) was irradiated to the applied composition for 200 seconds under nitrogen atmosphere to obtain samples.

### <Tg Determination>

Each of the photocurable compositions for sealing a liquid crystal panel described later in Examples 1 to 3 and Comparative Examples 1 to 4 was applied to a substrate to a thickness of about 200 µm using an applicator. Then, 250 W/m² of UV-visible light(using a high-pressure mercury lamp) was irradiated to the applied composition for 200 seconds under nitrogen atmosphere to obtain samples.
Each of the resulting samples was subjected to measurement using a viscoelasticity measuring instrument under the trade name of "Solid Analyzer RSAII" from Rheometrics (frequency: 1 Hz, temperature elevation at 5°C/min.). In this procedure, Tg was defined as a temperature at which tan δ reaches the maximum, in which tan δ is determined by dividing the loss elastic modulus by the storage elastic modulus.

### <Preparation of Liquid Crystal Panels for Voltage Holding Ratio Test and Heat Resistance Test>

A 5% dispersion of a spacer under the trade name of "Micropearl SP209" from Sekisui Chemical Co., Ltd. in ethanol was sprayed onto a glass substrate with indium tin oxide (ITO) "RZ-B107N1N" manufactured by EHC. Next, each of the photocurable compositions for sealing a liquid crystal panel described later in Examples 1 to 3 and Comparative Examples 1 to 4 was applied to the other paired glass plate with ITO to a width of about 1 mm using a dispenser so as to form two filling ports for liquid crystal in an outer periphery of the glass plate. Then, sprayed substrate was overlaid thereon after adjusting a position. And 400 W/m² of UV-visible light (using a high-pressure mercury lamp) was irradiated to the applied sealing material for 100 seconds under nitrogen atmosphere to thereby obtain a two-hole cell.

A liquid crystal composition for driving TFT (thin-film transistor) having the following constitution was charged into the two-hole cell in vacuum. After the liquid crystal composition was masked so as to avoid direct exposure to ultraviolet radiation, the two holes were sealed with a liquid crystal panel end-sealing material (under the trade name of "3026B" from Three Bond Co., Ltd.), and 400 W/m² of UV-visible light (using a high-pressure mercury lamp) was irradiated again for 100 seconds under nitrogen atmosphere to obtain a liquid crystal panel.

### Constitution of Liquid Crystal Composition for Driving TFT

| | |
|---|---|
| 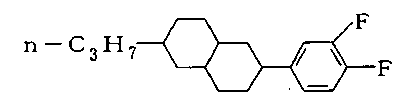 | 20% by mass |
| 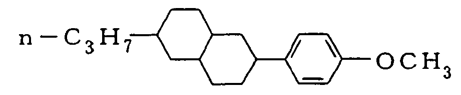 | 25% by mass |
| 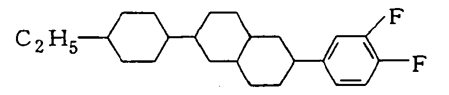 | 20% by mass |
| 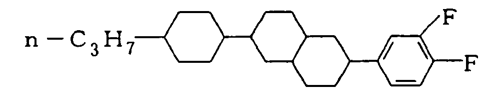 | 20% by mass |
| 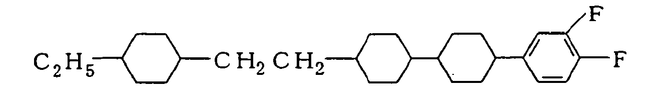 | 7% by mass |
| 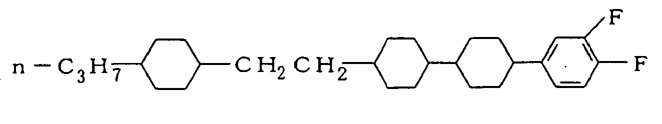 | 8% by mass |

Physical Properties of the above Liquid Crystal Composition for Driving TFT
Anisotropy in dielectric constant (Δε) : 5.30
Specific resistance: 5.2 × 10¹⁴ Ω.m

### <Voltage Holding Ratio Measurement>

The voltage holding ratio of each of the above-prepared liquid crystal panels was determined before and after standing still in a thermostatic oven at 80°C for 1 hour.

Specifically, an initial voltage of AC 5 V was applied to the sample liquid crystal panel for 64 microseconds, and the voltages before and after a frame time of 200 milliseconds were measured. The voltage holding ratio was calculated by multiplying the ratio of the voltage before the frame time to the voltage after the frame time by 100.

### <Heat Resistance Test>

Each of the above-prepared liquid crystal panels was left to stand in a thermostatic oven at 85°C and relative humidity of 85% for 1000 hours, was cooled to room temperature, and the adhesion portion of the liquid crystal panel was observed. The heat resistance was determined based on whether or not the sealed liquid crystal leaked from the liquid crystal panel and whether or not there is misalignment, according to the following two criteria.
Good: Neither leakage nor misalignment is observed.
Failure: Leakage and/or misalignment is observed.

### <Curability>

Each of the photocurable compositions for sealing a liquid crystal panel described later in Examples 1 to 3 and Comparative Examples 1 to 4 was applied to a substrate to a thickness of about 10 µm using an applicator. 400 W/m² of UV-visible light (using a high pressure mercury lamp) was irradiated to the applied composition under nitrogen atmosphere. In this procedure, the curability was defined as the dose of light (J/cm²) necessary for the applied composition to become free from tacking.

### [Synthetic Example 1] (Synthesis of dimaleimide having tricyclodecane structure)

In a four-neck flask equipped with a stirrer and a thermometer, 60 parts of butyl maleimidoacetate (hereinafter abbreviated to "MIAB"), 27 parts of bis-hydroxy-tricyclo[5.2.1.0^{2,6}]decane manufactured by Maruzen Petrochemical Co., Ltd., 0.12 parts of hydroquinone and 0.5 parts of dioctyltin oxide were charged. The mixture was raised in temperature to 127°C under reduced pressure and was subjected to transesterification reaction while produced butanol was distilled off. The reaction mixture was diluted with an equal amount of toluene. The toluene solution was washed three times with an equal amount of a 7.5% by mass aqueous solution of sulfuric acid to the toluene solution. After drying over magnesium sulfate overnight, toluene was distilled off using an evaporator to obtain a maleimide compound (molecular formula: C₂₂H₂₂O₈N₂, molecular mass: 442.43) represented by following formula (4). The fused alicyclic structure moiety in this compound has a molecular formula of C₁₀H₁₄ (molecular weight: 134.22), and the content of the fused alicyclic structure moiety in the compound stands at 30.3% by mass.

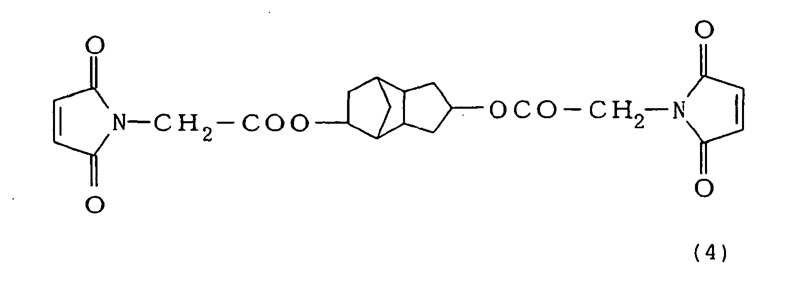

### [Synthetic Example 2] (Synthesis of maleimide compound having adamantane skeleton)

A maleimide compound (molecular formula: C₁₆H₁₉O₄N₁, molecular weight: 280.26) represented by following formula (5) was prepared in the same manner as in Synthetic Example 1, except for using 25 parts of MIAB, 15 parts of adamantanol and 0.05 parts of dioctyltin oxide charged in a four-neck flask equipped with a stirrer and a thermometer. The fused alicyclic structure moiety in this compound has a molecular formula of C₁₀H₁₅ (molecular weight: 135.23), and the content of the fused alicyclic structure moiety in the compound stands at 48.3% by mass.

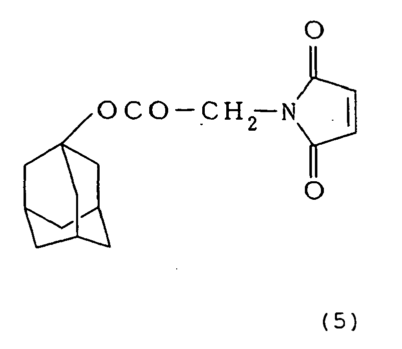

### [Synthetic Example 3] (Synthesis of urethane acrylate having isophorone ring)

In a reactor equipped with a nitrogen gas inlet pipe, a stirrer, a condenser and a thermometer, 232 parts of 2-hydroxyethyl acrylate and 222 parts of isophorone diisocyanate were charged, followed by addition of 0.4 parts of t-butylhydroquinone as a polymerization inhibitor and 0.1 parts of tin octylate as a catalyst. After stirring at 60°C for 1 hour, 0.2 parts of tin octylate was further added, followed by reaction at 70°C for 11 hours to obtain a urethane acrylate (molecular formula: C₂₂H₄₀O₈N₂, molecular weight: 460.57) represented by following formula (6). This compound contains 0.05% of residual isocyanate. The alicyclic structure moiety of this compound has a molecular formula of C₉H₂₄ (molecular weight: 132.29), and the content of the alicyclic structure moiety in the compound stands at 28.7% by mass.

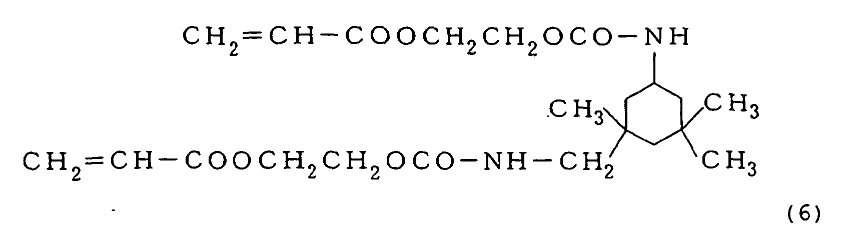

### [Comparative Synthetic Example 1] (Synthesis of maleimide compound having hydrogenated bisphenol A skeleton)

A maleimide compound (molecular formula: C₂₅H₃₄O₈N₂, molecular weight: 490.55) represented by following formula (7) was prepared in the same manner as in Synthetic Example 1, except for using 50 parts of MIAB, 24 parts of hydrogenated bisphenol A (trade name: "Rikabinol HB") manufactured by New Japan Chemical Co., Ltd. and 0.05 part of dioctyltin oxide in a four-neck flask equipped with a stirrer and a thermometer. The alicyclic structure moiety of this compound has a molecular formula of C₁₂H₂₀ (molecular weight: 164.29), and the content of the alicyclic structure moiety in the compound stands at 33.5% by mass.

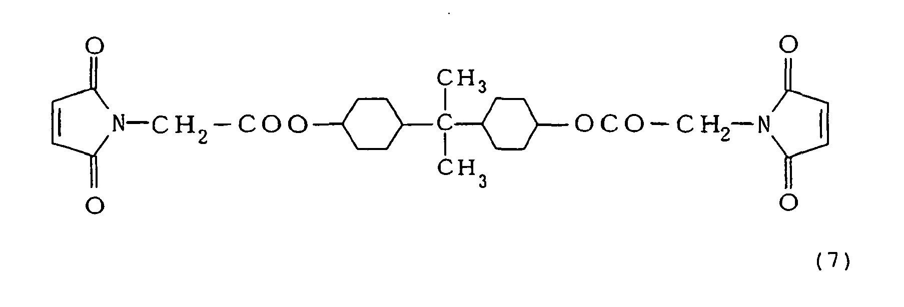

### [Comparative Synthetic Example 2] (Synthesis of urethane acrylate having tolylene ring)

In a reactor equipped with a nitrogen gas inlet pipe, a stirrer, a condenser and a thermometer, 232 parts of 2-hydroxyethyl acrylate and 174 parts of 2,6-tolylene diisocyanate were charged, followed by addition of 0.4 parts of t-butylhydroquinone as a polymerization inhibitor and 0.1 part of tin octylate as a catalyst. After stirring at 60°C for 1 hour, 0.2 part of tin octylate was further added, followed by reaction at 70°C for 11 hours to obtain a urethane acrylate (molecular formula: C₁₉H₂₀O₈N₂, molecular weight: 404.38) represented by following formula (8). This compound contains 0.05% of residual isocyanate.

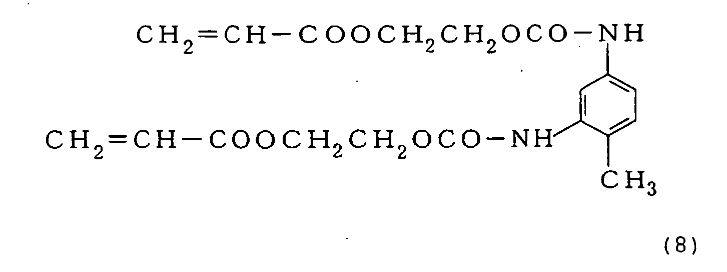

### [Example 1]

A photocurable composition for sealing a liquid crystal panel was prepared by stirring, at 60°C, 25 parts of the maleimide compound represented by the formula (4) prepared in Synthetic Example 1, 36 parts of a urethane acrylate having an isophorone ring and three acryloyl groups per molecule (trade name: "EB4866", manufactured by DAICEL-UCB Company, Ltd., content of alicyclic structure moiety: 24.2% by mass), 37 parts of tricyclodecane monoacrylate (trade name: "FA513A", manufactured by Hitachi Chemical Co., Ltd., content of fused alicyclic structure moiety: 65.6% by mass) and 2 parts of 3-acryloyloxypropyltrimethoxysilane (trade name: "KBM5103", manufactured by Shin-Etsu Chemical Co., Ltd.). The total content of the fused alicyclic structures is 31.8% by mass and the total content of the fused alicyclic structure moieties and the alicyclic structures is 40.6% by mass, each based on the total mass of the photopolymerizable compounds in this composition. The properties of the composition were determined according to the above-mentioned methods. The results are shown in Table 1.

### [Example 2]

A photocurable composition for sealing a liquid crystal panel was prepared in the same manner as in Example 1, except for using the maleimide compound represented by the formula (5) prepared in Synthetic Example 2 instead of the maleimide compound represented by the formula (4) prepared in Synthetic Example 1. The total content of the fused alicyclic structures is 36.3% by mass and the total content of the fused alicyclic structure moieties and the alicyclic structures is 45.1% by mass, each based on the total mass of the photopolymerizable compounds in this composition. The properties of the composition were determined according to the above-mentioned methods. The results are shown in Table 1.

### [Example 3]

A photocurable composition for sealing a liquid crystal panel was prepared by stirring, at 60°C, 25 parts of the maleimide compound represented by the formula (4) prepared in Synthetic Example 1, 36 parts of the urethane acrylate represented by the formula (6), 37 parts of tricyclodecane monoacrylate (trade name: "FA513A", manufactured by Hitachi Chemical Co., Ltd.) and 2 parts of 3-acryloyloxypropyltrimethoxysilane (trade name: "KBM5103", manufactured by Shin-Etsu Chemical Co., Ltd.). The total content of the fused alicyclic structures is 31.8% by mass and the total content of the fused alicyclic structure moieties and the alicyclic structures is 42.2% by mass, based on the total mass of the photopolymerizable compounds in this composition. The properties of the composition were determined according to the above-mentioned methods. The results are shown in Table 1.

### [Comparative Example 1]

A photocurable composition for sealing a liquid crystal panel was prepared in the same manner as in Example 1, except for using the maleimide compound represented by the formula (4) prepared in Synthetic Example 1 alone. The total content of the fused alicyclic structures is 30.3% by mass and the total content of the fused alicyclic structure moieties and the alicyclic structures is 30.3% by mass, each based on the total mass of the photopolymerizable compounds in this composition. The properties of this product were determined according to the above-mentioned methods. The results are shown in Table 1.

### [Comparative Example 2]

A photocurable composition for sealing a liquid crystal panel was prepared in the same manner as in Example 3, except for using the urethane acrylate represented by the formula (8) instead of the urethane acrylate represented by the formula (6) prepared in Synthetic Example 1. The total content of the fused alicyclic structures is 31.4% by mass and the total content of the fused alicyclic structure moieties and the alicyclic structures is 31.4% by mass, each based on the total mass of the photopolymerizable compounds in this composition. The properties of this composition were determined according to the above-mentioned methods. The results are shown in Table 1.

### [Comparative Example 3]

A photocurable composition for sealing a liquid crystal panel was prepared in the same manner as in Example 1, except for using a maleimide compound represented by following formula (9) instead of the maleimide compound represented by the formula (4) prepared in Synthetic Example 1. The total content of the fused alicyclic structures is 24.3% by mass and the total content of the fused alicyclic structure moieties and the alicyclic structures is 33.0% by mass, each based on the total mass of the photopolymerizable compounds in this composition. The properties of this composition were determined according to the above-mentioned methods. The results are shown in Table 1.

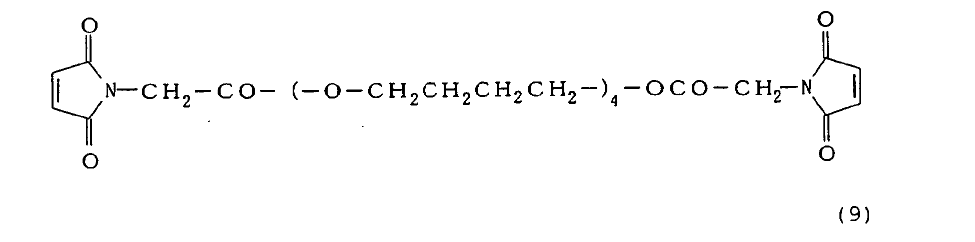

### [Comparative Example 4]

A photocurable composition for sealing a liquid crystal panel was prepared in the same manner as in Example 1, except for using the maleimide compound represented by the formula (7) instead of the maleimide compound represented by the formula (4) prepared in Synthetic Example 1. The total content of the fused alicyclic structures is 24.3% by mass and the total content of the fused alicyclic structure moieties and the alicyclic structures is 41.4% by mass, each based on the total mass of the photopolymerizable compounds in this composition. The properties of this composition were determined according to the above-mentioned methods. The results are shown in Table 1.

**Table 1**

| | Adhesion | Moisture proof | Tg (°C) | Voltage holding ratio (%) | Heat resistance test | Curability (J/cm²) |
|---|---|---|---|---|---|---|
| Example 1 | A | 5.5 | > 130 | 94.7 | Good | 0.6 |
| Example 2 | B | 8.9 | > 130 | 94.7 | Good | 0.6 |
| Example 3 | B | 5.5 | > 130 | 94.7 | Good | 0.6 |
| Comparative Example 1 | D | -*¹ | > 130 | -*² | -*² | 0.2 |
| Comparative Example 2 | A | 10.4 | > 130 | 94.7 | Good | 2.0 |
| Comparative Example 3 | B | 26.2 | 75 | 88.0 | Failure | 0.5 |
| Comparative Example 4 | C | 16.1 | 96 | 94 .7 | Failure | 0.6 |

| | | | | | | |
|---|---|---|---|---|---|---|
| *1) The cured film was fragile, and the properties could not be determined. *2) The composition was not adhered, and the test sample could not be prepared. | | | | | | |

The results in Table 1 show that the compositions of the examples are excellent in the adhesion, moisture proof, Tg, voltage holding ratio and heat resistance. In contrast, the composition of Comparative Example 4 is unsatisfactory in the adhesion, moisture proof, Tg and heat resistance. The composition of Comparative Example 4 uses the photopolymerizable compound having a monocyclic alicyclic structure and a maleimide group, instead of the photopolymerizable compound having a fused alicyclic structure and a maleimide group.

Comparison between Example 3 and Comparative Example 2 indicates that the composition of Example 3 is superior in the moisture proof and the curability to the composition of Comparative Example 2. The composition of Example 3 uses a photopolymerizable compound having an alicyclic structure and two or more (meth)acryloyl groups per molecule as the photopolymerizable compound having two or more (meth)acryloyl groups per molecule. In contrast, the composition of Comparative Example 2 uses a photopolymerizable compound having an aromatic ring structure and two or more (meth)acryloyl groups per molecule, instead of the photopolymerizable compound having an alicyclic structure and two or more (meth)acryloyl groups per molecule.

### INDUSTRIAL APPLICABILITY

The photocurable composition for sealing a liquid crystal panel of the present invention is useful as a sealing material or end-sealing material exhibiting excellent moisture proof, since a cured resin article made therewith is substantially impermeable to gas such as water vapor. The photocurable composition for sealing a liquid crystal panel of the present invention is also useful as a sealing material or end-sealing material exhibiting excellent heat resistance, since its cured resin article has a high Tg.

In addition, when the photocurable composition for sealing a liquid crystal panel of the present invention further comprises a silane coupling agent, it is useful as a sealing material or end-sealing material exhibiting further satisfactory adhesion.

The photocurable composition for sealing a liquid crystal panel of the present invention is also useful as a sealing material or end-sealing material for the preparation of a liquid crystal panel which is free from a decreased voltage holding ratio. This is because the cured resin article of the photocurable composition does not obtain a photo-decomposed product which may bleed out into the material for liquid crystal.

## Claims

1. A photocurable composition for sealing a liquid crystal panel, comprising:
(1) a photopolymerizable compound having a fused alicyclic structure and a maleimide group; and
(2) a photopolymerizable compound having an alicyclic structure and two or more (meth)acryloyl groups per molecule.

2. The photocurable composition for sealing a liquid crystal panel according to claim 1, wherein the photopolymerizable compound having a fused alicyclic structure and a maleimide group is a compound having one of a bicyclodecane structure, an adamantane ring and a tricyclodecane ring.

3. The photocurable composition for sealing a liquid crystal panel according to claim 1, wherein the fused alicyclic structure is contained in the photopolymerizable compound having the fused alicyclic structure and a maleimide group in an amount within a range of 20 to 70% by mass.

4. The photocurable composition for sealing a liquid crystal panel according to claim 1, wherein the photopolymerizable compound having an alicyclic structure and two or more (meth)acryloyl groups per molecule is a urethane (meth)acrylate.

5. The photocurable composition for sealing a liquid crystal panel according to claim 1, wherein the alicyclic structure is contained in the compound having the alicyclic structure and two or more (meth)acryloyl groups per molecule in an amount within a range of 5 to 30% by mass.

6. The photocurable composition for sealing a liquid crystal panel according to claim 1, further comprising a silane coupling agent.

7. A liquid crystal panel having a seal portion comprising a cured resin article of the photocurable composition of any one of claims 1 to 6.

8. A liquid crystal panel having an end-sealing portion comprising a cured resin article of the photocurable composition of any one of claims 1 to 6.

## Patentansprüche

1. Durch Licht härtbare Zusammensetzung zur Versiegelung einer Flüssigkristallplatte, umfassend:
(1) eine durch Licht polymerisierbare Verbindung, die eine anellierte alicyclische Struktur und eine Maleimidgruppe hat, und
(2) eine durch Licht polymerisierbare Verbindung, die eine alicyclische Struktur und zwei oder mehr (Meth)acryloylgruppen pro Molekül hat.

2. Durch Licht härtbare Zusammensetzung zur Versiegelung einer Flüssigkristallplatte gemäß Anspruch 1, wobei die durch Licht polymerisierbare Verbindung, die eine anellierte alicyclische Struktur und eine Maleimidgruppe hat, eine Verbindung ist, die eines aus einer Bicyclodecanstruktur, einem Adamantanring und einem Tricyclodecanring hat.

3. Durch Licht härtbare Zusammensetzung zur Versiegelung einer Flüssigkristallplatte gemäß Anspruch 1, wobei die anellierte alicyclische Struktur in der durch Licht polymerisierbaren Verbindung, die eine anellierte alicyclische Struktur und eine Maleimidgruppe hat, in einer Menge im Bereich von 20 bis 70 Massenprozent enthalten ist.

4. Durch Licht härtbare Zusammensetzung zur Versiegelung einer Flüssigkristallplatte gemäß Anspruch 1, wobei die durch Licht polymerisierbare Verbindung, die eine alicyclische Struktur und zwei oder mehr (Meth)acryloylgruppe(n) pro Molekül hat, ein Urethan(meth)acrylat ist.

5. Durch Licht härtbare Zusammensetzung zur Versiegelung einer Flüssigkristallplatte gemäß Anspruch 1, wobei die alicyclische Struktur in der Verbindung, die die alicyclische Struktur und zwei oder mehr (Meth)acryloylgruppen pro Molekül hat, in einer Menge im Bereich von 5 bis 30 Massenprozent enthalten ist.

6. Durch Licht härtbare Zusammensetzung zur Versiegelung einer Flüssigkristallplatte gemäß Anspruch 1, die außerdem einen Silan-Haftvermittler umfasst.

7. Flüssigkristallplatte mit einem Versiegelungsteil, umfassend einen gehärteten Harzgegenstand der durch Licht härtbaren Zusammensetzung gemäß einem der Ansprüche 1 bis 6.

8. Flüssigkristallplatte mit einem Endversiegelungsteil, umfassend einen gehärteten Harzgegenstand der durch Licht härtbaren Zusammensetzung gemäß einem der Ansprüche 1 bis 6.

## Revendications

1. Composition photodurcissable d'étanchéification d'un panneau à cristaux liquides comprenant:
(1) un composé photopolymérisable ayant une structure alicyclique fusionnée et un groupe maléimide et
(2) un composé photopolymérisable ayant une structure alicyclique et au moins deux groupes (méth)acryloyle par molécule.

2. Composition photodurcissable d'étanchéification d'un panneau à cristaux liquides selon la revendication 1, dans laquelle le composé photopolymérisable ayant une structure alicyclique fusionnée et un groupe maléimide est un composé ayant une structure choisie parmi une structure de bicyclodécane, un cycle d'adamantane et un cycle de tricyclodécane.

3. Composition photodurcissable d'étanchéification d'un panneau à cristaux liquides selon la revendication 1, dans laquelle la structure alicyclique fusionnée est contenue dans le composé photopolymérisable ayant la structure alicyclique fusionnée et le groupe maléimide dans une quantité dans la gamme de 20 % à 70 % en masse.

4. Composition photodurcissable d'étanchéification d'un panneau à cristaux liquides selon la revendication 1, dans laquelle le composé photopolymérisable ayant une structure alicyclique et au moins deux groupes (méth)acryloyle par molécules est un (méth)acrylate d'uréthane.

5. Composition photodurcissable d'étanchéification d'un panneau à cristaux liquides selon la revendication 1, dans laquelle la structure alicyclique est contenue dans le composé ayant la structure alicyclique et au moins deux groupes (méth)acryloyle par molécule dans une quantité dans la gamme de 5 à 30 % en masse.

6. Composition photodurcissable d'étanchéification d'un panneau à cristaux liquides selon la revendication 1 comprenant en outre un agent de couplage silane.

7. Panneau à cristaux liquides ayant un élément d'étanchéification comprenant un article de résine curée de la composition photodurcissable selon l'une quelconque des revendications 1 à 6.

8. Panneau à cristaux liquides ayant un élément d'étanchéification finale comprenant un article de résine curée de la composition photodurcissable selon l'une quelconque des revendications 1 à 6.
